# EUROPÄISCHE PATENTSCHRIFT

(11) **EP 3 970 077 B1**
(45) Veröffentlichungstag und Bekanntmachung des Hinweises auf die Patenterteilung: **29.05.2024**
(21) Anmeldenummer: 20730186.2
(22) Anmeldetag: 22.04.2020
(51) Int. Cl.: G06N 3/08, B60W 50/00, G05D 1/02

(54) **VERFAHREN ZUM TRAINIEREN WENIGSTENS EINES ALGORITHMUS FÜR EIN STEUERGERÄT EINES KRAFTFAHRZEUGS, COMPUTERPROGRAMMPRODUKT, KRAFTFAHRZEUG SOWIE SYSTEM**
METHOD FOR TRAINING AT LEAST ONE ALGORITHM FOR A CONTROL UNIT OF A MOTOR VEHICLE, COMPUTER PROGRAM PRODUCT, MOTOR VEHICLE AND SYSTEM
PROCÉDÉ POUR L'ENTRAÎNEMENT D'AU MOINS UN ALGORITHME POUR UN APPAREIL DE COMMANDE D'UN VÉHICULE AUTOMOBILE, PRODUIT DE PROGRAMME INFORMATIQUE, VÉHICULE AUTOMOBILE AINSI QUE SYSTÈME

(30) Priorität: 13.05.2019 DE 102019206908
(43) Veröffentlichungstag der Anmeldung: 23.03.2022
(73) Patentinhaber: Stellantis Auto SAS, 78300 Poissy (FR)
(72) Erfinder: EBERLE, Ulrich, 65428 Rüsselsheim am Main (DE); HALLERBACH, Sven, 65428 Rüsselsheim am Main (DE)
(74) Vertreter: Spitzfaden, Ralf
(86) Internationale Anmeldenummer: PCT/EP2020/061204
(87) Internationale Veröffentlichungsnummer: WO 2020/229116

(56) Entgegenhaltungen:
- US-A1- 2018 009 445
- US-A1- 2018 154 899
- THOMAS BOCK ET AL: "Vehicle in the Loop - Ein innovativer Ansatz zur Kopplung virtueller mit realer Erprobung", ATZ - AUTOMOBILTECHNISCHE ZEITSCHRIFT, Bd. 110, Nr. 1, 1. Januar 2008 (2008-01-01), Seiten 10-16, XP055144045, ISSN: 0001-2785, DOI: 10.1007/BF03221943
- BÖDE ECKARD ET AL: "Efficient Splitting of Test and Simulation Cases for the Verification of Highly Automated Driving Functions", 17. August 2018 (2018-08-17), ANNUAL INTERNATIONAL CONFERENCE ON THE THEORY AND APPLICATIONS OF CRYPTOGRAPHIC TECHNIQUES, EUROCRYPT 2018; [LECTURE NOTES IN COMPUTER SCIENCE; LECT.NOTES COMPUTER], SPRINGER, BERLIN, HEIDELBERG, PAGE(S) 139 - 153, XP047484244, ISBN: 978-3-642-17318-9 [gefunden am 2018-08-17] Chapter "1. Introduction"
- SVEN HALLERBACH ET AL: "Simulation-Based Identification of Critical Scenarios for Cooperative and Automated Vehicles", SAE INTERNATIONAL JOURNAL OF CONNECTED AND AUTOMATED VEHICLES, Bd. 1, Nr. 2, 16. Februar 2018 (2018-02-16), Seiten 93-106, XP055663706, ISSN: 2574-075X, DOI: 10.4271/2018-01-1066
- JEROEN PLOEG ET AL: "Towards nondestructive testing of pre-crash systems in a HIL setup", INTELLIGENT VEHICLES SYMPOSIUM, 2008 IEEE, IEEE, PISCATAWAY, NJ, USA, 4. Juni 2008 (2008-06-04), Seiten 91-96, XP031318796, ISBN: 978-1-4244-2568-6

## Beschreibung

Vorliegend werden ein Verfahren zum Trainieren wenigstens eines Algorithmus für ein Steuergerät eines Kraftfahrzeugs, ein Computerprogrammprodukt, ein Kraftfahrzeug sowie ein System beschrieben.

Verfahren, Computerprogrammprodukte, Kraftfahrzeuge sowie Systeme der eingangs genannten Art sind im Stand der Technik bekannt. Die ersten teilautomatisiert fahrenden Kraftfahrzeuge (entspricht SAE Level 2 gemäß SAE J3016) sind in den vergangenen Jahren zur Serienreife gelangt. Automatisiert (entspricht SAE Level >=3 gemäß SAE J3016) bzw., autonom (entspricht SAE Level 4/5 gemäß SAE J3016) fahrende Kraftfahrzeuge müssen anhand vielfältiger Vorgaben, zum Beispiel Fahrziel und Einhaltung gängiger Verkehrsregeln, mit maximaler Sicherheit auf unbekannte Verkehrssituationen selbständig reagieren. Da die Verkehrswirklichkeit aufgrund der Unvorhersehbarkeit des Verhaltens anderer Verkehrsteilnehmer, insbesondere menschlicher Verkehrsteilnehmer, hoch komplex ist, gilt es als nahezu unmöglich, entsprechende Steuergeräte von Kraftfahrzeugen mit herkömmlichen Methoden und auf der Grundlage von menschengemachten Regeln zu programmieren.

Zur Bewältigung komplexer Probleme mittels Computern ist es darüber hinaus bekannt, mit Methoden des maschinellen Lernens bzw. der künstlichen Intelligenz Algorithmen zu entwickeln bzw. sich entwickeln zu lassen. Solche Algorithmen können einerseits maßvoller auf komplexe Verkehrssituationen reagieren als traditionelle Algorithmen. Andererseits ist es mithilfe künstlicher Intelligenz prinzipiell möglich, die Algorithmen während des Entwicklungsprozesses und im Alltag durch ständiges Lernen weiterzuentwickeln und kontinuierlich zu verbessern. Alternativ kann ein Stand des Algorithmus nach der Beendigung einer Trainingsphase im Entwicklungsprozess und einer Validierung durch den Hersteller eingefroren werden.

Aus der DE 10 2016 116 135 A1 ist ein Verfahren zur Simulation einer Kollisionssituation zwischen zwei Fahrzeugen zum Testen eines Fahrassistenzsystems in einem Fahrsimulator oder einem Vehicle-in-the-Loop-Szenario bekannt. Einem auf einem Simulationsrechner simulierten Fellow-Fahrzeug wird eine Trajektorie zugeordnet, die durch einen Kollisionsort einer beabsichtigen Kollision zwischen dem Fellow-Fahrzeug und einem nicht von dem Simulationsrechner gesteuerten Ego-Fahrzeug führt. Dem Fellow-Fahrzeug wird weiterhin eine gewünschte Eintreffgeschwindigkeit am Kollisionsort vorgegeben. Das Fahrassistenzsystem wird eingerichtet, um mit der simulierten Umgebung in Echtzeit Daten auszutauschen und in einer Kollisionssituation das Fahrverhalten des Ego-Fahrzeugs zu beeinflussen. Der Abstand des unvorhersehbar gesteuerten Ego-Fahrzeugs zum Kollisionsort und die aktuelle Geschwindigkeit des Ego-Fahrzeugs werden zyklisch ermittelt. Für jeden Zyklus wird für das Fellow-Fahrzeug ein Sollabstand zum Kollisionsort ermittelt, den das Fellow-Fahrzeug haben müsste, um unter der Annahme des Fahrens mit der vorgegebenen Eintreffgeschwindigkeit zeitgleich mit dem Ego-Fahrzeug am Kollisionsort einzutreffen. Ein Regelkreis regelt die Geschwindigkeit des Fellow-Fahrzeugs, um die Differenz zwischen dem Sollabstand und dem tatsächlichen Abstand zu verringern.

Aus Thomas Bock et al: "Vehicle in the Loop - Ein innovativer Ansatz zur Kopplung virtueller mit realer Erprobung", ATZ - AUTOMOBILTECHNISCHE ZEITSCHRIFT, Bd. 110, Nr. 1, 1. Januar 2008, Seiten 10-16, ist eine Test- und Simulationsumgebung für Fahrerassistenzsysteme bekannt, welche die Vorzüge eines realen Versuchsfahrzeugs mit der Sicherheit und Reproduzierbarkeit von Fahrsimulationen kombiniert.

Ferner sind aus Jeroen Ploeg et al: "Towards nondestructive testing of pre-crash systems in a HIL setup", Intelligent Vehicles Symposium, 2008 IEEE, 4. Juni 2008, Seiten 91-96, Verfahren zum Testen von Advanced Driver Assistance Systems bekannt, die auf Hardware-in-the-Loop basierten Methoden beruhen.

Nachteilig hieran ist, dass das System vor allem virtuell trainiert wird. Reale Verkehrsteilnehmer reagieren aber teilweise anders als simulierte Verkehrsteilnehmer. Derartige unvorhersehbare Situationen können bei rein virtuellen Trainingsverfahren nicht berücksichtigt werden.

Somit stellt sich die Aufgabe, Verfahren, Computerprogrammprodukte, Kraftfahrzeuge sowie Systeme der eingangs genannten Art dahingehend weiterzubilden, dass eine bessere Abstimmung eines trainierten Algorithmus auf reale Verkehrssituationen stattfinden kann.

Die Aufgabe wird gelöst durch ein Verfahren zum Trainieren wenigstens eines Algorithmus für ein Steuergerät eines Kraftfahrzeugs gemäß Anspruch 1, ein System gemäß dem nebengeordneten Anspruch 13 und ein Computerprogrammproduktmodul gemäß dem nebengeordneten Anspruch 14. Weiterführende Ausgestaltungen und Weiterbildungen sind Gegenstand der abhängigen Ansprüche.

Erfindungsgemäß wird ein Verfahren zum Trainieren wenigstens eines Algorithmus für ein Steuergerät eines Kraftfahrzeugs beschrieben, wobei das Steuergerät zur Umsetzung einer automatisierten bzw. autonomen Fahrfunktion unter Eingriff in Aggregate des Kraftfahrzeugs auf der Grundlage von Eingangsdaten unter Verwendung des wenigstens einen Algorithmus vorgesehen ist, wobei der Algorithmus durch ein selbstlernendes neuronales Netz trainiert wird, umfassend folgende Schritte:
a) Bereitstellen eines Computerprogrammproduktmoduls für die automatisierte bzw. autonome Fahrfunktion, wobei das Computerprogrammproduktmodul den zu trainierenden Algorithmus und das selbstlernende neuronale Netz enthält,
b) Einbetten des trainierten Computerprogrammproduktmoduls in das Steuergerät des Kraftfahrzeugs,
c) Fahren des Kraftfahrzeugs in einer real existierenden Verkehrsumgebung durch einen menschlichen Fahrer, wobei die Fahrt eine gefahrene Trajektorie bestimmt,
d) Zuführen von Daten einer Umgebungssensorik und einer Kraftfahrzeugsensorik zu dem Steuergerät und Berechnen einer virtuellen Trajektorie durch den Algorithmus,
e) Ableiten einer Metrik aus einem Vergleich der gefahrenen Trajektorie und der virtuellen Trajektorie sowie Speichern der Daten der Umgebungssensorik und der Kraftfahrzeugsensorik in einem Speicher, wenn für eine Verkehrssituation bestimmte Metrikkriterien erfüllt sind,
f) Zurverfügungstellen von Informationen betreffend die Verkehrssituation an eine Verkehrssimulation,
g) Analyse der Verkehrssituation durch die Verkehrssimulation, wobei anhand von Kartendaten, der Umgebungssensorik und der Kraftfahrzeugsensorik ein virtuelles Abbild der Verkehrssituation erstellt wird, wobei mittels der Verkehrssimulation die Daten der Verkehrssituation variiert werden,
h) Trainieren des Algorithmus durch die Variation der Verkehrssituation.
Dadurch, dass mithilfe einer Metrik bestimmte Verkehrssituationen ausgewählt werden, die anschließend in einer Verkehrssimulation mit geringfügigen Abweichungen durch Variation der Daten der Verkehrssituation variiert wird, kann das Spektrum an Verkehrssituationen erheblich erweitert werden, insbesondere solche Verkehrssituationen, bei denen ein menschlicher Fahrer einen für den Algorithmus unbekannten Lösungsweg verwendet hat. Somit kann der Algorithmus robuster werden als mit herkömmlichen Verfahren.

Die Verkehrsumgebung kann zum Beispiel eine reale Straße oder ein abgeriegeltes Testgelände sein.

Ein weiterer Vorteil ist, dass die Verkehrssimulation das Trainieren des Algorithmus aus einer allwissenden Perspektive heraus vornimmt, da die Verkehrssituation in der Vergangenheit liegt, sodass die Reaktionen der anderen Verkehrsteilnehmer bereits bekannt sind.

In einer ersten weiterführenden Ausgestaltung kann vorgesehen sein, dass der Verkehrssimulation Daten der real existierenden Verkehrsumgebung, der Umgebungssensorik und der Kraftfahrzeugsensorik bereitgestellt werden.

Daten der real existierenden Verkehrsumgebung können Straßenkartendaten, Trajektorien anderer Verkehrsteilnehmer, Zustände der Straße und der Verkehrsleiteinrichtungen und dergleichen mehr sein.

Daten der Umgebungssensorik können beispielsweise Kameradaten, Radardaten, LIDAR-Daten, Ultraschall-Daten, Temperaturdaten und dergleichen mehr sein.

Daten der Kraftfahrzeugsensorik können beispielsweise Daten betreffend Geschwindigkeit, Kurvengeschwindigkeit, Lenkradstellung, Gaspedalstellung, eingelegter Gang, Motorlast, Radschlupf und Ähnliches sein.

Mithilfe dieser Daten lässt sich eine Verkehrssituation in Bezug auf die relevanten Parameter weitgehend vollständig nachbilden.

In einer weiteren weiterführenden Ausgestaltung kann vorgesehen sein, dass die Daten der Verkehrssituation stochastisch variiert werden.

Hierdurch kann sichergestellt werden, dass der Algorithmus vielfältig trainiert wird.

In einer weiteren weiterführenden Ausgestaltung kann vorgesehen sein, dass zusätzlich zur Umgebungssensorik Infrastruktursensoren vorgesehen sind.

Solche Infrastruktursensoren können beispielsweise Sensoren von Verkehrsleitanlagen, beispielsweise Ampeln sein. Die Sensoren können beispielsweise auch in Vorrichtungen zur Verkehrsbeobachtung eingesetzt sein, beispielsweise in fliegenden Vorrichtungen wie zum Beispiel Hubschraubern Drohnen oder dergleichen.

In einer weiteren weiterführenden Ausgestaltung kann vorgesehen sein, dass sich in der Verkehrsumgebung neben verschiedenen Verkehrsteilnehmern Dummyobjekte befinden.

Dummyobjekte können beispielsweise überfahrbare Ziele, Ballonautos, Dummyfußgänger oder dergleichen mehr sein.

In einer weiteren weiterführenden Ausgestaltung kann vorgesehen sein, dass die Metrik ein Maß der Abweichung zwischen gefahrener Trajektorie und virtueller Trajektorie aufweist.

Somit können Situationen extrahiert werden, in denen sich der Algorithmus erheblich anders verhalten hätte als der menschliche Fahrer.

In einer weiteren weiterführenden Ausgestaltung kann vorgesehen sein, dass die Metrik eine räumliche und/oder zeitliche Abweichung von gefahrener Trajektorie und virtueller Trajektorie aufweist.

Hierdurch lassen sich insbesondere solche Situationen herausfiltern, in denen der Algorithmus einen anderen Weg eingeschlagen hätte und/oder in der er eine andere Geschwindigkeit gewählt hätte, beispielsweise in einer Gefahrensituation.

In einer weiteren weiterführenden Ausgestaltung kann vorgesehen sein, dass das Steuergerät vom Eingriff in die Aggregate abgekoppelt ist.

Hierdurch können Einflüsse des Algorithmus auf das Fahrverhalten des Kraftfahrzeugs verhindert werden. Stattdessen simuliert der Algorithmus eine virtuelle Fahrt parallel zur Fahrt des menschlichen Fahrers.

In einer weiteren weiterführenden Ausgestaltung kann vorgesehen sein, dass die Verkehrssimulation eine Simulation der Verkehrssituation aus der Perspektive des Kraftfahrzeugs und/oder aus der Perspektive der Verkehrsumgebung durchführt.

Durch die Perspektive aus der Verkehrsumgebung können Rückschlüsse auf Optimierungspotenzial in der Verkehrsumgebung gezogen werden.

In einer weiteren weiterführenden Ausgestaltung kann vorgesehen sein, dass ein korrumpierender Programmteil in den Algorithmus eingeschleust wird.

Hierdurch kann geprüft werden, wie sich der Algorithmus verhält, wenn er durch einen Hackerangriff gestört werden soll.

In einer weiteren weiterführenden Ausgestaltung kann vorgesehen sein, dass eine Validierung des Algorithmus durch Vergleich der gefahrenen Trajektorie und der virtuellen Trajektorie vorgenommen wird.

Eine Validierung des Algorithmus kann dann erfolgen, wenn der Algorithmus sich wie ein menschlicher Fahrer verhält.

In einer weiteren weiterführenden Ausgestaltung kann vorgesehen sein, dass die Daten der Umgebungssensorik und der Kraftfahrzeugsensorik fortlaufend zwischengespeichert werden.

Auf diese Weise können die Daten aus dem Zwischenspeicher solange vorgehalten werden, bis die Metrik interessante Verkehrssituationen identifiziert hat, die längerfristig gespeichert und an die Verkehrssimulation weitergeleitet werden sollen.

Ein erster unabhängiger nicht zur Erfindung gehörender Gegenstand betrifft eine Vorrichtung zum Trainieren wenigstens eines Algorithmus für ein Steuergerät eines Kraftfahrzeugs beschrieben, wobei das Steuergerät zur Umsetzung einer automatisierten bzw. autonomen Fahrfunktion unter Eingriff in Aggregate des Kraftfahrzeugs auf der Grundlage von Eingangsdaten unter Verwendung des wenigstens einen Algorithmus vorgesehen ist, wobei ein selbstlernendes neuronales Netz zum Trainieren des Algorithmus vorgesehen ist, mit:
a) Mitteln zum Bereitstellen eines Computerprogrammproduktmoduls für die automatisierte bzw. autonome Fahrfunktion, wobei das Computerprogrammproduktmodul den zu trainierenden Algorithmus und das selbstlernende neuronale Netz enthält,
b) Mitteln zum Einbetten des trainierten Computerprogrammproduktmoduls in das Steuergerät des Kraftfahrzeugs,
c) Mitteln zum Bestimmen einer gefahrenen Trajektorie auf der Basis einer Fahrt des Kraftfahrzeugs in einer real existierenden Verkehrsumgebung durch einen menschlichen Fahrer,
d) Mitteln zum Zuführen von Daten einer Umgebungssensorik und einer Kraftfahrzeugsensorik zu dem Steuergerät und Mitteln zum Berechnen einer virtuellen Trajektorie durch den Algorithmus,
e) Mitteln zum Ableiten einer Metrik aus einem Vergleich der gefahrenen Trajektorie und der virtuellen Trajektorie sowie Mitteln zum Speichern der Daten der Umgebungssensorik und der Kraftfahrzeugsensorik in einem Speicher, wenn für eine Verkehrssituation bestimmte Metrikkriterien erfüllt sind,
f) Mitteln zum Zurverfügungstellen von Informationen betreffend die Verkehrssituation an eine Verkehrssimulation,
(g) Mitteln zur Analyse der Verkehrssituation durch die Verkehrssimulation, die dazu eingerichtet sind, anhand der Kartendaten, der Umgebungssensorik und der Kraftfahrzeugsensorik ein virtuelles Abbild der Verkehrssituation zu erstellen, wobei Mittel zur Variation der Daten der Verkehrssituation der Verkehrssimulation vorgesehen sind, und
(h) Mittel zum Trainieren des Algorithmus durch die Variation der Verkehrssituation.

In einer ersten weiterführenden Ausgestaltung kann vorgesehen sein, dass Mittel vorgesehen sind, der Verkehrssimulation Daten der real existierenden Verkehrsumgebung, der Umgebungssensorik und der Kraftfahrzeugsensorik bereitzustellen.

In einer weiteren weiterführenden Ausgestaltung kann vorgesehen sein, dass Mittel zur stochastischen Variation der Daten der Verkehrssituation vorgesehen sind.

In einer weiteren weiterführenden Ausgestaltung kann vorgesehen sein, dass zusätzlich zur Umgebungssensorik Infrastruktursensoren vorgesehen sind.

In einer weiteren weiterführenden Ausgestaltung kann vorgesehen sein, dass sich in der Verkehrsumgebung neben verschiedenen Verkehrsteilnehmern Dummyobjekte befinden.

In einer weiteren weiterführenden Ausgestaltung kann vorgesehen sein, dass die Metrik ein Maß der Abweichung zwischen gefahrener Trajektorie und virtueller Trajektorie aufweist.

In einer weiteren weiterführenden Ausgestaltung kann vorgesehen sein, dass die Metrik eine räumliche und/oder zeitliche Abweichung von gefahrener Trajektorie und virtueller Trajektorie aufweist.

In einer weiteren weiterführenden Ausgestaltung kann vorgesehen sein, dass das Steuergerät vom Eingriff in die Aggregate abgekoppelt ist.

In einer weiteren weiterführenden Ausgestaltung kann vorgesehen sein, dass die Verkehrssimulation eine Simulation der Verkehrssituation aus der Perspektive des Kraftfahrzeugs und/oder aus der Perspektive der Verkehrsumgebung durchführt.

In einer weiteren weiterführenden Ausgestaltung kann vorgesehen sein, dass Mittel zum Einschleusen eines korrumpierenden Programmteils vorgesehen sind.

In einer weiteren weiterführenden Ausgestaltung kann vorgesehen sein, dass Mittel zur Validierung des Algorithmus durch Vergleich der gefahrenen Trajektorie und der virtuellen Trajektorie vorgesehen sind.

In einer weiteren weiterführenden Ausgestaltung kann vorgesehen sein, dass Mittel zum fortlaufenden Zwischenspeichern der Daten der Umgebungssensorik und der Kraftfahrzeugsensorik vorgesehen sind.

Ein weiterer unabhängiger Gegenstand betrifft ein System mit einem Kraftfahrzeug sowie einer Verkehrssimulation. Das Kraftfahrzeug umfasst ein Steuergerät, in dem ein Computerprogrammproduktmodul eingebettet ist, wobei das Computerprogrammproduktmodul einen trainierten Algorithmus und ein selbstlernendes neuronales Netz enthält. Der Algorithmus ist ausgebildet, basierend auf dem Steuergerät zugeführten Daten einer Umgebungssensorik und einer Kraftfahrzeugsensorik eine virtuelle Trajektorie zu berechnen. Der Algorithmus ist ferner ausgebildet, aus einem Vergleich einer gefahrenen Trajektorie und der virtuellen Trajektorie eine Metrik abzuleiten, so dass von Daten der Umgebungssensorik und der Kraftfahrzeugsensorik gespeichert werden, wenn für eine Verkehrssituation bestimmte Metrikkriterien erfüllt sind. Die Verkehrssimulation ist ausgebildet, zur Verfügung gestellte Informationen betreffend die Verkehrssituation zu analysieren und anhand von Kartendaten, der Umgebungssensorik und der Kraftfahrzeugsensorik ein virtuelles Abbild der Verkehrssituation zu erstellen. Die Verkehrssimulation ist ferner ausgebildet, die Daten der Verkehrssituation zu variieren, so dass der Algorithmus durch die Variation der Verkehrssituation trainierbar ist.

Das Verfahren kann auf einer oder auf mehreren Recheneinheiten verteilt ausgeführt werden, sodass bestimmte Verfahrensschritte auf der einen Recheneinheit und andere Verfahrensschritte auf wenigstens einer weiteren Recheneinheit ausgeführt werden, wobei berechnete Daten sofern notwendig zwischen den Recheneinheiten übermittelt werden können.

Ein weiterer unabhängiger Gegenstand betrifft ein Computerprogrammproduktmodul für ein System der zuvor beschriebenen Art.

Weitere Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen. Dabei zeigen schematisch:
- Fig. 1: ein Kraftfahrzeug, das zum automatisierten bzw. autonomen Fahren eingerichtet ist;
- Fig. 2: ein Computerprogrammprodukt für das Kraftfahrzeug aus Fig. 1;
- Fig. 3: ein Testgelände mit dem Kraftfahrzeug aus Fig. 1, sowie
- Fig. 4: ein Ablaufdiagramm des Verfahrens.

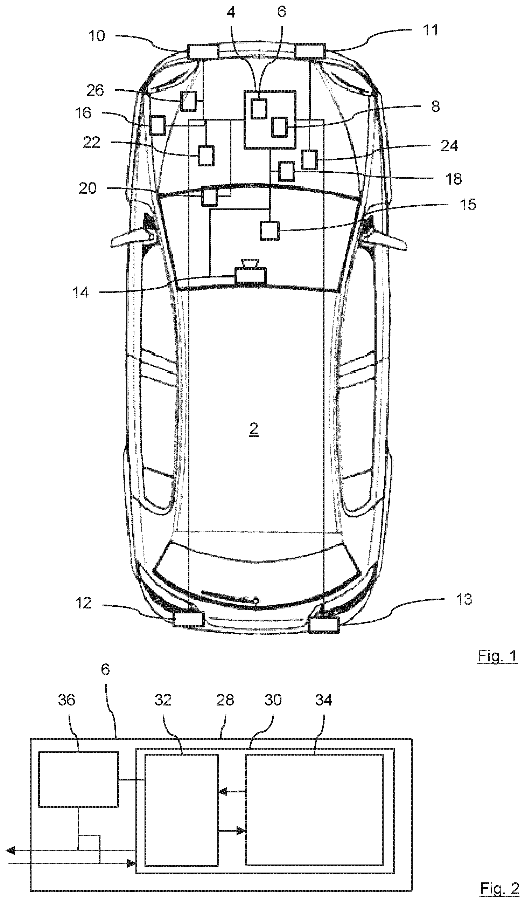

Fig. 1 zeigt ein Kraftfahrzeug 2, das zum automatisierten bzw. autonomen Fahren eingerichtet ist.

Das Kraftfahrzeug 2 weist ein Steuergerät 4 mit einer Recheneinheit 6 und einem Speicher 8 auf. Im Speicher 8 ist ein Computerprogrammprodukt gespeichert, das im Nachfolgenden im Zusammenhang mit den Fig. 2 bis 4 noch eingehender beschrieben wird.

Das Steuergerät 4 ist einerseits mit einer Reihe von Umgebungssensoren verbunden, die eine Erfassung der aktuellen Lage des Kraftfahrzeugs 2 sowie der jeweiligen Verkehrssituation erlauben. Hierzu zählen Umgebungssensoren 10, 11 an der Front des Kraftfahrzeugs 2, Umgebungssensoren 12, 13 am Heck des Kraftfahrzeugs 2, eine Kamera 14 sowie ein GPS-Modul 16. Die Umgebungssensoren 10 bis 13 können z.B. Radar-, Lidar- und/oder Ultraschallsensoren umfassen.

Des Weiteren sind Sensoren zur Erfassung des Zustands des Kraftfahrzeugs 2 vorgesehen, unter anderem Raddrehzahlsensoren 16, Beschleunigungssensoren 18 und Pedalsensoren 20, die mit dem Steuergerät 4 verbunden sind. Mithilfe dieser Kraftfahrzeugsensorik kann der momentane Zustand des Kraftfahrzeuges 2 zuverlässig erfasst werden.

Während des Betriebs des Kraftfahrzeugs 2 hat die Recheneinheit 6 das im Speicher 8 abgelegte Computerprogrammprodukt geladen und führt dieses aus. Auf der Grundlage eines Algorithmus und der Eingangssignale entscheidet die Recheneinheit 6 über die Steuerung des Kraftfahrzeugs 2, die die Recheneinheit 6 über Eingriff in die Lenkung 22, Motorsteuerung 24 sowie Bremsen 26 erreichen würde, die jeweils mit dem Steuergerät 4 verbunden sind.

Vorliegend ist die Recheneinheit 6 von einem tatsächlichen Eingriff in die Lenkung 22, die Motorsteuerung 24 und Bremsen 26 abgekoppelt, die Steuerung des Kraftfahrzeugs 2 obliegt einem Menschen. Die Recheneinheit 6 befindet sich somit im Kraftfahrzeug 2 zu Zwecken des Lernens in einem rein beobachtenden und simulativen Betrieb, der von Fachleuten auch als "Silent Testing" oder "Shadowing" bezeichnet wird. Hierbei werden die ausgeführten Entscheidungen des niedriger-automatisierten Systems mit den simulierten Entscheidungen des automatisierten bzw. autonomen Systems verglichen.

Daten der Sensoren 10 bis 20 werden fortlaufend im Speicher 8 zwischengespeichert und nach einer vorgegebenen Zeitdauer verworfen, damit diese Umgebungsdaten zur weiteren Auswertung zur Verfügung stehen können.

Fig. 2 zeigt ein Computerprogrammprodukt 28 mit einem Computerprogrammproduktmodul 30.

Das Computerprogrammproduktmodul 30 weist ein selbstlernendes neuronales Netz 32 auf, das einen Algorithmus 34 trainiert. Das selbstlernende neuronale Netz 32 lernt nach Methoden des bestärkenden Lernens, d. h. das neuronale Netz 32 versucht durch Variation des Algorithmus 34, Belohnungen für ein verbessertes Verhalten entsprechend einer oder mehrerer Kriterien oder Maßstäbe, also für Verbesserungen des Algorithmus 34 zu erhalten. Alternativ können aber auch bekannte Lernverfahren des überwachten und unüberwachten Lernens, sowie Kombinationen dieser Lernverfahren verwendet werden.

Der Algorithmus 34 kann im Wesentlichen ein komplexer Filter mit einer Matrix aus Werten, in der Regel Gewichte genannt, bestehen, die eine Filterfunktion definieren, die das Verhalten des Algorithmus 34 abhängig von Eingangsgrößen, welche vorliegend über die Umgebungssensoren 10 bis 20 aufgenommen werden, bestimmt und Steuersignale zur Steuerung des Kraftfahrzeugs 2 generiert, die aber vorliegend nicht umgesetzt werden. Stattdessen wird eine sich daraus ergebende Trajektorie berechnet.

Das Computerprogrammproduktmodul 30 kann sowohl im Kraftfahrzeug 2 als auch außerhalb des Kraftfahrzeugs 2 laufen. Somit ist es möglich, das Computerprogrammproduktmodul 30 sowohl in einer realen Umgebung als auch in einer Simulationsumgebung zu trainieren, was die Geschwindigkeit und den Trainingserfolg erhöht.

Das Computerprogrammproduktmodul 30 ist dazu eingerichtet, eine Metrik aufzustellen, die das Verhalten des realen Fahrers des Kraftfahrzeuges 2 mit dem simulierten Verhalten des Computerprogrammprodukts 28 vergleicht, also die real gefahrene Trajektorie mit einer vom Algorithmus 34 berechneten, virtuellen Trajektorie. Die Metrik umfasst zeitliche und/oder räumliche Abweichungen der gefahrenen Trajektorie und der simulierten, virtuellen Trajektorie. Wenn die Metrik eine gewisse Schwelle überschritten hat, beispielsweise eine Abweichung der beiden Trajektorien um einen Abstand größer eines Mindestabstandes, z.B. mehr als 2 m, kann die betreffende Verkehrssituation, in der die Abweichung zustande kam, gespeichert werden, damit sie später in einer Simulationsumgebung, in der eine Verkehrssimulation durchgeführt wird, nachgebildet werden kann.

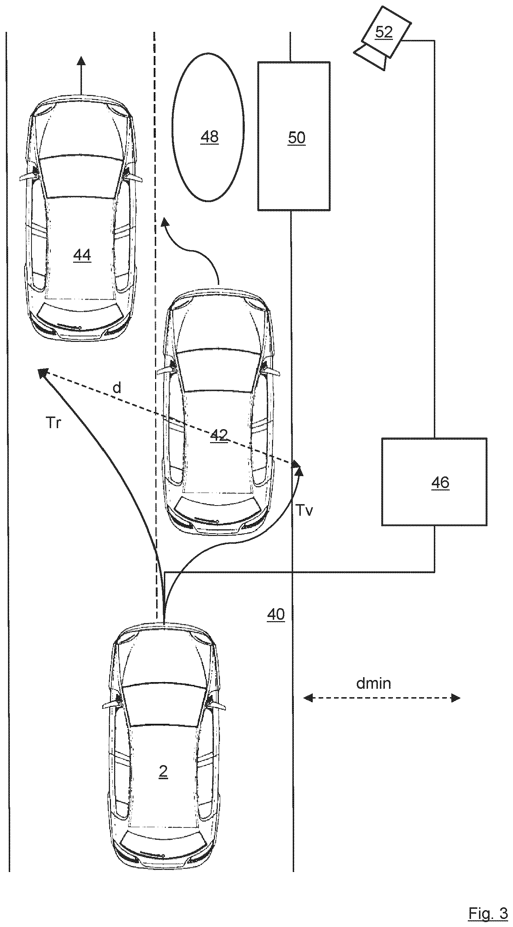

Fig. 3 zeigt eine Straße 40 mit dem Kraftfahrzeug 2 aus Fig. 1. Die Straße 40 befindet sich auf einem Testgelände, könnte aber auch eine öffentliche Straße sein.

Das Kraftfahrzeug 2 fährt hinter zwei weiteren Kraftfahrzeugen 42, 44 her, wobei sich das Kraftfahrzeug 2 mit höherer Geschwindigkeit bewegt als die Kraftfahrzeuge 42, 44.

Durch die Verwendung von realen Kraftfahrzeugen 42, 44 nehmen die Umgebungssensoren 10 bis 20 des Kraftfahrzeugs 2 reale Daten auf. Somit kann sichergestellt werden, dass die Umgebungssensoren 10 bis 20 unter allen Umständen und mit verschiedenen Kraftfahrzeugen 44, 46 als anderen Verkehrsteilnehmern zuverlässig funktionieren.

Für eine später eingehender beschriebene Verkehrssimulation 46 dient im Wesentlichen ein Rechenzentrum. In der Verkehrssimulation 46 im Rechenzentrum sind Kartendaten betreffend die Straße 40 abgespeichert. Des Weiteren sind Simulationsdaten betreffend das Kraftfahrzeug 2 in der Verkehrssimulation 46 gespeichert.

Auf der Straße 40 sind des Weiteren Dummyobjekte 48, 50 platziert, die vorliegend ebenfalls Kraftfahrzeuge darstellen. Hierdurch kann die Anzahl von Objekten, mit denen der Algorithmus 34 des neuronalen Netzes 32 trainiert wird, erhöht werden.

Aufgrund der Dummyobjekte 48, 50 ist jeweils eine Reaktion sowohl des Kraftfahrzeugs 42 als auch des Kraftfahrzeugs 2 erforderlich, z.B. Ausweichen oder Abbremsen, um eine Kollision mit den Dummyobjekten 48, 50 zu verhindern. Das Kraftfahrzeug 50 zieht zum Ausweichen und Umfahren der beiden Dummyobjekte 48, 50 nach links.

In der vorliegenden Verkehrssituation errechnet der Algorithmus 34 des Kraftfahrzeugs 2 eine virtuelle Trajektorie Tv, die das Kraftfahrzeug 42 vermeidet und das Kraftfahrzeug 2 vor den Dummyobjekten 48, 50 zum Stehen bringt. Dies erfordert wenige Lenkeingriffe und vermeidet weitere Risiken, die sich jenseits des Kraftfahrzeugs 44 befinden könnten, erfordert aber anschließend ein Rangieren und Umfahren der Dummyobjekte 48, 50, was sich im fließenden Verkehr als Herausforderung darstellen und Verzögerungen verursachen könnte.

Der Fahrer des Kraftfahrzeugs 2 hingegen entscheidet sich für eine davon erheblich abweichende gefahrene Trajektorie Tr, da ihm diese in der vorliegenden Situation als sicherer und effizienter erscheint als eine der virtuellen Trajektorie Tv (die der Fahrer nicht kennt) ähnlichen Trajektorie. Im Wesentlichen hat sich der Fahrer des Kraftfahrzeuges 2 dazu entschieden, die anderen Kraftfahrzeuge 42 und 44 durch eine Lenkbewegung nach links zu überholen.

Als Metrik wird vorliegend ein Abstand d zwischen der virtuellen Trajektorie Tv und einer realen Trajektorie Tr verwendet. Das Metrikkriterium zur Speicherung der Daten der Sensoren ist, dass der Abstand d größer oder gleich einem Mindestabstand dmin ist.

Unter den in Fig. 3 beschriebenen Umständen würde die Metrik d eine Speicherung der Daten der Sensoren 10 - 20 veranlassen, da die real gefahrene Trajektorie Tr und die virtuelle Trajektorie Tv erheblich voneinander abweichen und der Abstand der Trajektorien Tv und Tr d größer als dmin ist.

Die Simulationsumgebung 46 kann des Weiteren das Verhalten des Kraftfahrzeugs 2 analysieren und zur Verbesserung eines Simulationsalgorithmus sowie des Algorithmus 34 verwenden.

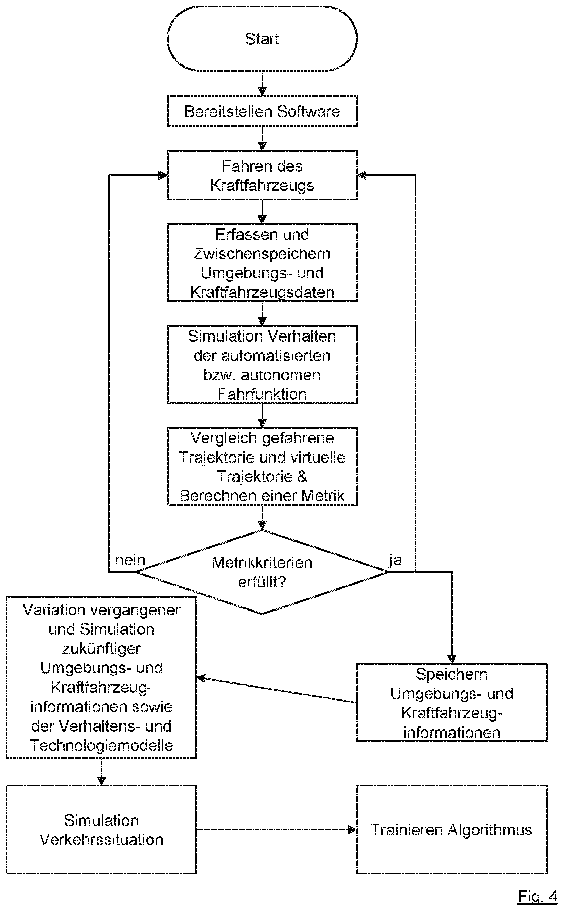

Fig. 4 zeigt ein Ablaufdiagramm des Verfahrens zum Trainieren des Algorithmus 34.

In einem ersten Schritt wird das Computerprogrammprodukt (Software) 28 auf dem Steuergerät 4 des Kraftfahrzeugs 2 bereitgestellt, zum Beispiel durch Installieren des Computerprogrammprodukts 28 im Speicher 8 der Recheneinheit 6.

In einem darauffolgenden Schritt wird das Kraftfahrzeug 2 auf einem Testgelände oder im regulären Straßenverkehr auf der Straße 40 gefahren.

Während der Fahrt des Kraftfahrzeugs 2 durch einen menschlichen Fahrer werden Umgebungs- und Kraftfahrzeugdaten erfasst, dem Steuergerät 4 zugeführt und im Speicher 8 zwischengespeichert.

Das Steuergerät 4 des Kraftfahrzeugs 2 berechnet das Verhalten des Kraftfahrzeugs 2 unter Verwendung der autonomen Fahrfunktion auf der Basis des Algorithmus 34, setzt die dafür notwendigen Eingriffe in die Aggregate 22, 24, 26 des Kraftfahrzeugs 2 allerdings nicht um.

Die Berechnung umfasst die Ermittlung einer virtuellen Trajektorie Tv, die das Kraftfahrzeug 2 fahren würde, wenn die autonome Fahrfunktion die Kontrolle über das Kraftfahrzeug 2 hätte.

Parallel dazu werden die tatsächlich gefahrene Trajektorie Tr und die virtuelle Trajektorie Tv miteinander verglichen und eine Metrik erstellt. Die Metrik kann zum Beispiel ein Abstand zwischen gefahrener Trajektorie Tr und virtueller Trajektorie sein.

Sind definierte Metrikkriterien erfüllt, werden die Umgebungs- und Kraftfahrzeugdaten gespeichert und der Verkehrssimulation 46 nebst den Kartendaten zur Verfügung gestellt.

Die Verkehrssimulation 46 simuliert die zukünftige Verkehrssituation basierend auf den in der Verkehrssimulation implementierten Verhaltens- und Technologie-Modellen (Ermittlung der zukünftigen Umgebungs- und Kraftfahrzeugdaten, zum Beispiel der Geschwindigkeiten und/oder Trajektorien der Verkehrsteilnehmer), und trainiert dadurch den Algorithmus.

Darüber hinaus können in der Verkehrssimulation auch zeitlich vergangene Umgebungs- und Kraftfahrzeugdaten variiert werden (Variation der Wetterbedingungen, Variation der Position von Objekten, Variation von Geschwindigkeiten usw.) und dadurch kann der Algorithmus ebenfalls trainiert werden.

Zudem können die Verhaltens- und Technologiemodelle der Verkehrssimulation 46 jedes einzelnen Verkehrsteilnehmer (u.a. Reaktionszeit, Aggressivität des Fahrverhaltens usw.) sowie andere Charakteristika (z.B. Straßen-Layout, Ampel-Schaltzeiten usw.) variiert werden und dadurch kann der Algorithmus ebenfalls trainiert werden.

Obwohl der Gegenstand im Detail durch Ausführungsbeispiele näher illustriert und erläutert wurde, so ist die Erfindung nicht durch die offenbarten Beispiele eingeschränkt und andere Variationen können vom Fachmann hieraus abgeleitet werden. Es ist daher klar, dass eine Vielzahl von Variationsmöglichkeiten existiert. Es ist ebenfalls klar, dass beispielhaft genannte Ausführungsformen nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche und deren rechtliche Entsprechungen, wie etwa weitergehenden Erläuterung in der Beschreibung, definiert wird.

### Bezugszeichenliste

- 2: Kraftfahrzeug
- 4: Steuergerät
- 6: Recheneinheit
- 8: Speicher
- 10: Umgebungssensor
- 11: Umgebungssensor
- 12: Umgebungssensor
- 13: Umgebungssensor
- 14: Kamera
- 15: GPS-Modul
- 16: Raddrehzahlsensor
- 18: Beschleunigungssensor
- 20: Pedalsensor
- 22: Lenkung
- 24: Motorsteuerung
- 26: Bremsen
- 28: Computerprogrammprodukt
- 30: Computerprogrammproduktmodul
- 32: neuronales Netz
- 34: Algorithmus
- 36: Computerprogrammproduktmodul
- 40: Straße
- 42: Kraftfahrzeug
- 44: Kraftfahrzeug
- 46: Verkehrssimulation
- 48: Dummyobjekt
- 50: Dummyobjekt
- 52: Infrastrukturkamera
- d: Abstand virtuelle Trajektorie und reale Trajektorie
- dmin: Metrikkriterium
- Tv: virtuelle Trajektorie
- Tr: reale Trajektorie

## Patentansprüche

1. Verfahren zum Trainieren wenigstens eines Algorithmus (34) für ein Steuergerät (4) eines Kraftfahrzeugs (2), wobei das Steuergerät (4) zur Umsetzung einer automatisierten bzw. autonomen Fahrfunktion unter Eingriff in Aggregate (22, 24, 26) des Kraftfahrzeugs (2) auf der Grundlage von Eingangsdaten unter Verwendung des wenigstens einen Algorithmus (34) vorgesehen ist, wobei der Algorithmus (34) durch ein selbstlernendes neuronales Netz (32) trainiert wird, umfassend folgende Schritte:
a) Bereitstellen eines Computerprogrammproduktmoduls (30) für die automatisierte bzw. autonome Fahrfunktion, wobei das Computerprogrammproduktmodul (30) den zu trainierenden Algorithmus (34) und das selbstlernende neuronale Netz (32) enthält,
b) Einbetten des trainierten Computerprogrammproduktmoduls (30) in das Steuergerät (4) des Kraftfahrzeugs (2),
c) Fahren des Kraftfahrzeugs (2) in einer real existierenden Verkehrsumgebung (40) durch einen menschlichen Fahrer, wobei die Fahrt eine gefahrene Trajektorie (Tr) bestimmt,
d) Zuführen von Daten einer Umgebungssensorik (10, 11, 12, 13, 14, 15) und einer Kraftfahrzeugsensorik (16, 18, 20) zu dem Steuergerät (4) und Berechnen einer virtuellen Trajektorie (Tv) durch den Algorithmus (34),
e) Ableiten einer Metrik (d) aus einem Vergleich der gefahrenen Trajektorie (Tr) und der virtuellen Trajektorie (Tv) sowie Speichern der Daten der Umgebungssensorik (10, 11, 12, 13, 14, 15) und der Kraftfahrzeugsensorik (16, 18, 20) in einem Speicher (8), wenn für eine Verkehrssituation bestimmte Metrikkriterien (d > dmin) erfüllt sind,
f) Zurverfügungstellen von Informationen betreffend die Verkehrssituation an eine Verkehrssimulation (46),
g) Analyse der Verkehrssituation durch die Verkehrssimulation (46), wobei anhand von Kartendaten, der Umgebungssensorik (10, 11, 12, 13, 14, 15) und der Kraftfahrzeugsensorik (16, 18, 20) ein virtuelles Abbild der Verkehrssituation erstellt wird, wobei mittels der Verkehrssimulation (46) die Daten der Verkehrssituation variiert werden,
h) Trainieren des Algorithmus (34) durch die Variation der Verkehrssituation.

2. Verfahren nach Anspruch 1, wobei der Verkehrssimulation (46) Daten der real existierenden Verkehrsumgebung (40), der Umgebungssensorik (10, 11, 12, 13, 14, 15) und der Kraftfahrzeugsensorik (16, 18, 20) bereitgestellt werden.

3. Verfahren nach Anspruch 1 oder 2, wobei die Daten der Verkehrssituation stochastisch variiert werden.

4. Verfahren nach einem der vorangegangenen Ansprüche, wobei zur Umgebungssensorik (10, 11, 12, 13, 14, 15) zusätzlich Infrastruktursensoren (52) vorgesehen sind.

5. Verfahren nach einem der vorangegangenen Ansprüche, wobei sich in der Verkehrsumgebung neben verschiedenen Verkehrsteilnehmern Dummyobjekte (48, 50) befinden.

6. Verfahren nach einem der vorangegangenen Ansprüche, wobei die Metrik (d) ein Maß der Abweichung zwischen gefahrener Trajektorie (Tr) und virtueller Trajektorie (Tv) aufweist.

7. Verfahren nach Anspruch 6, wobei die Metrik (d) eine räumliche und/oder zeitliche Abweichung von gefahrener Trajektorie (Tr) und virtueller Trajektorie (Tv) aufweist.

8. Verfahren nach einem der vorangegangenen Ansprüche, wobei das Steuergerät (4) vom Eingriff in die Aggregate (22, 24, 26) abgekoppelt ist.

9. Verfahren nach einem der vorangegangenen Ansprüche, wobei die Verkehrssimulation (46) eine Simulation der Verkehrssituation aus der Perspektive des Kraftfahrzeugs (2) und/oder aus der Perspektive der Verkehrsumgebung (40) durchführt.

10. Verfahren nach einem der vorangegangenen Ansprüche, wobei ein korrumpierender Programmteil in den Algorithmus (34) eingeschleust wird.

11. Verfahren nach einem der vorangegangenen Ansprüche, wobei eine Validierung des Algorithmus (34) durch Vergleich der gefahrenen Trajektorie (Tr) und der virtuellen Trajektorie (Tv) vorgenommen wird.

12. Verfahren nach einem der vorangegangenen Ansprüche, wobei die Daten der Umgebungssensorik (10, 11, 12, 13, 14, 15) und der Kraftfahrzeugsensorik (16, 18, 20) fortlaufend zwischengespeichert werden.

13. System mit einem Kraftfahrzeug (2) sowie einer Verkehrssimulation (46), wobei das Kraftfahrzeug (2) ein Steuergerät (4) umfasst, in dem ein Computerprogrammproduktmodul (30) eingebettet ist, wobei das Computerprogrammproduktmodul (30) einen trainierten Algorithmus (34) und ein selbstlernendes neuronales Netz (32) enthält, wobei der Algorithmus (34) ausgebildet ist, basierend auf dem Steuergerät (4) zugeführten Daten einer Umgebungssensorik (10, 11, 12, 13, 14, 15) und einer Kraftfahrzeugsensorik (16, 18, 20) eine virtuelle Trajektorie (Tv) zu berechnen und wobei der Algorithmus (34) ferner ausgebildet ist, aus einem Vergleich einer gefahrenen Trajektorie (Tr) und der virtuellen Trajektorie (Tv) eine Metrik (d) abzuleiten, so dass von Daten der Umgebungssensorik (10, 11, 12, 13, 14, 15) und der Kraftfahrzeugsensorik (16, 18, 20) gespeichert werden, wenn für eine Verkehrssituation bestimmte Metrikkriterien (d > dmin) erfüllt sind, und wobei die Verkehrssimulation (46) ausgebildet ist, zur Verfügung gestellte Informationen betreffend die Verkehrssituation zu analysieren und anhand von Kartendaten, der Umgebungssensorik (10, 11, 12, 13, 14, 15) und der Kraftfahrzeugsensorik (16, 18, 20) ein virtuelles Abbild der Verkehrssituation zu erstellen, und wobei die Verkehrssimulation (46) ferner ausgebildet ist, die Daten der Verkehrssituation zu variieren, so dass der Algorithmus (34) durch die Variation der Verkehrssituation trainierbar ist.

14. Computerprogrammproduktmodul für ein System nach vorstehendem Anspruch 13, umfassend einen trainierten Algorithmus (34) und ein selbstlernendes neuronales Netz (32), wobei der Algorithmus (34) ausgebildet ist, basierend auf einem Steuergerät (4) zugeführten Daten einer Umgebungssensorik (10, 11, 12, 13, 14, 15) und einer Kraftfahrzeugsensorik (16, 18, 20) eine virtuellen Trajektorie (Tv) zu berechnen und wobei der Algorithmus (34) ausgebildet ist, aus einem Vergleich einer gefahrenen Trajektorie (Tr) und der virtuellen Trajektorie (Tv) eine Metrik (d) abzuleiten, so dass von Daten einer Umgebungssensorik (10, 11, 12, 13, 14, 15) und einer Kraftfahrzeugsensorik (16, 18, 20) für eine Verkehrssimulation (46) gespeichert werden, wenn für eine Verkehrssituation bestimmte Metrikkriterien (d > dmin) erfüllt sind, und wobei der Algorithmus (34) ferner ausgebildet ist, durch eine Variation der Verkehrssituation trainiert zu werden.

## Claims

1. Procedure for operating at least one algorithm (34) for a control unit (4) of a motor vehicle (2), whereby the control unit (4) is designed to perform an automated or autonomous driving function by interfering with the aggregates (22, 24, 26) of the motor vehicle (2) on the basis of input data using at least one algorithm (34), the algorithm (34) training by a self-learning neural network (32), including the following steps:
a) Providing a computer program product module (30) for the automated or autonomous driving function, where the computer program product module (30) contains the algorithm (34) to be trained and the self-learning neural network (32),
b) embedding the trained computer program product module (30) to the control unit (4) of the motor vehicle (2),
c) driving the motor vehicle (2) in a real existing traffic environment (40) by a human driver, the journey determining a trajectory category (Tr) driven,
d) feeding data from an environmental sensor (10, 11, 12, 13, 11, (4, 15) and motor vehicle tracing (16, 18, 20) to the control unit (4) and calculation of virtual trajectory (Tv) by the algorithm (34),
e) derivation of a metric (d) from a comparison of trajectory theory (Tr) and virtual trajectory (Tv) and storage of data from sensory orientation (10, 11, 12, 13, 14, 15) and motor vehicle cords (16, 18, 20) in a storage space (8), if certain metrics (d > dmin) are met for a traffic situation,
(f) provision of traffic situation information to traffic simulation (46),
(g) traffic simulation analysis (46), using map data, environmental sensors (10, 11, 12, 13, 14, 15) and motor vehicle cords (16, 18, 20) to produce a virtual mapping of the traffic situation, using traffic simulation (46) (
h) train the algorithm (34) by the variation of the traffic situation.

2. Procedures according to claim 1, providing traffic simulation (46) with data on the real existing traffic environment (40), environmental sensory information (10, 11, 12, 13, 14, 15) and motor vehicle cords (16, 18, 20).

3. Procedures according to claim 1 or 2, where traffic data are stochastically varied.

4. Procedures according to one of the previous requirements, with additional infrastructure sensors (52) being provided for the environmental sensor (10, 11, 12, 13, 14, 15).

5. Procedures according to one of the previous requirements, with dummy objects (48, 50) located in the traffic environment alongside various road users.

6. Procedure according to one of the previous requirements, the metric (d) showing a degree of variation between trajectory theory (Tr) and virtual trajectory (Tv).

7. Procedure according to claim 6, where the metric (d) has a spatial and/or temporal deviation from trajectory (Tr) and virtual trajectory (Tv).

8. Procedure according to one of the previous claims, whereby the ECU (4) is decoupled from the intervention in the aggregates (22, 24, 26).

9. Procedures according to one of the previous requirements, whereby traffic simulation (46) simulates the traffic situation from the point of view of the vehicle (2) and/or from the point of view of the traffic environment (40).

10. Procedures according to one of the previous claims, with a corrupting program part inserted into the algorithm (34).

11. Procedure following one of the previous requirements, whereby validation of the algorithm (34) is performed by comparing the trajectory category (Tr) and the virtual trajectory (Tv).

12. Procedures according to one of the previous requirements, with the data of ambient sensors (10, 11, 12, 13, 14, 15) and motor vehicle cords (16, 18, 20) being continuously cached.

13. A system with a motor vehicle (2) and traffic simulation (46), the motor vehicle (2) being a control unit (4) embedded in a computer program product module (30), where the computer program product module (30) contains a trained algorithm (34) and a self-learning neural network (32), where the algorithm (32) 4) is trained to calculate a virtual trajectory (Tv) based on input data from the control unit (4) (10, 11, 12, 13, 14, 15) and a motor vehicle crank (16, 18, 20), and the algorithm (34) is also trained from a comparison of a traveled trajectorie (Tr) and virtual trajectory (Tv), to derive a metric (d) so that environmental sensory data (10, 11, 12, 13, 14, 15) and motor vehicle cords (16, 18, 20) are stored, if certain metrics (d > dmin) for a traffic situation are met, with training in traffic simulation (46), analyze the information provided on the traffic situation and use map data, environmental sensors (10, 11, 12, 13, 14, 15) and motor vehicle cords (16, 18, 20) to produce a virtual mapping of the traffic situation, and (46) is also trained to vary the traffic situation data so that the algorithm (34) can be trained by the variation of the traffic situation.

14. Computer program product module for a system according to the above requirement 13, including a trained algorithm (34) and a self-learning neuronal network (32), the algorithm (34) being trained based on environmental sensory data (10, 11, 12, 13, 14, 15) supplied by a control unit (4), and a motor vehicle sensorik (16, 18, 20) to calculate a virtual trajectory (Tv) and where the algorithm (34) is trained to derive a metric (d) from a comparison of a trajectory (Tr) and virtual trajectory (Tv), so that from data from an environmental sensory (10, 11, 12, 11, 1)3, 14, 15) and a motor vehicle crank (16, 18, 20) for traffic simulation (46) if certain metrics (d > dmin) are met for a traffic situation and the algorithm (34) is also trained to be trained by variation in traffic situation.

## Revendications

1. Procédé d'entrainement d'au moins un algorithme (34) pour un appareil de commande (4) d'un véhicule automobile (2), l'appareil de commande (4) servant à convertir une fonction de conduite automatisée ou autonome en engagement avec des agrégats (22, 24, 26) du véhicule automobile (2) sur la base de données d'entrée en utilisant l'au moins un algorithme (34) L'algorithme (34) est entraîné par un réseau neuronal auto-apprentissage (32), comprenant les étapes suivantes:
a) fournir un module de produit de programme informatique (30) pour la fonction de conduite automatisée ou autonome, le module de produit de programme informatique (30) fournissant l'algorithme à entraîner (34) et le réseau neuronal auto-apprentissage (32) comprend,
b) l'incorporation du module de produit de programme informatique entraîné (30) dans l'appareil de commande (4) du véhicule (2),
c) la conduite du véhicule automobile (2) par un conducteur humain dans un environnement de circulation réel (40), le déplacement déterminant une trajectoire dangereuse (Tr),
d) Fournir des données d'un système de détection d'environnement (10, 11, 12, 13, 14, 15) et d'un système de détection de véhicule automobile (16, 18, 20) au dispositif de commande (4) et calculer une trajectoire virtuelle (Tv) par l'algorithme (34),
e) d'une métrique (d), à partir d'une comparaison de la trajectoire (Tr) conduite et de la trajectoire virtuelle (Tv), et de la mémorisation des données de la théorie de l'environnement (10, 11, 12, 13, 14, 15) et de la logique de véhicule automobile (16, 18, 20) dans un mémoire (8), lorsque des critères métriques (d > dmin) sont remplis pour une situation de trafic,
f) mise à disposition d'informations concernant la situation de trafic à une simulation de trafic (46),
g) analyse de la situation de trafic à travers la simulation de trafic (46), à l'aide de données cartographiques, de la logique d'environnement (10, 10 1, 12, 13, 14, 15) et la logique (16, 18, 20) du véhicule automobile produisent une image virtuelle de la situation du trafic, les données de la situation du trafic variant au moyen de la simulation (46),
h) l'entrainement de l'algorithme (34) par la variation du trafic la situation.

2. Procédé selon la revendication 1, dans lequel la simulation de trafic (46) fournit des données de l'environnement de trafic réel existant (40), du système de détection d'environnement (10, 11, 12, 13, 14, 15) et du système de détection de véhicule automobile (16, 18, 20).

3. Procédé selon la revendication 1 ou 2, dans lequel les données de la situation du trafic varient stochastiquement.

4. Procédé selon l'une quelconque des revendications précédentes, dans lequel des capteurs d'infrastructure (52) sont en outre prévus pour la détection d'environnement (10, 11, 12, 13, 14, 15).

5. Procédé selon l'une quelconque des revendications précédentes, dans lequel des objets fictifs (48, 50) sont situés dans l'environnement de circulation à côté de différents usagers de la route.

6. Procédé selon l'une quelconque des revendications précédentes, dans lequel la métrique (d) comprend une mesure de l'écart entre la trajectoire de transport (Tr) et la trajectoire virtuelle (Tv).

7. Procédé selon la revendication 6, dans lequel la métrique (d) présente une déviation spatiale et/ou temporelle de la trajectoire dangereuse (Tr) et de la trajectoire virtuelle (Tv).

8. Procédé selon l'une quelconque des revendications précédentes, dans lequel le dispositif de commande (4) est déconnecté de l'engagement dans les agrégats (22, 24, 26).

9. Procédé selon l'une quelconque des revendications précédentes, dans lequel la simulation de trafic (46) effectue une simulation de la situation de trafic du point de vue du véhicule automobile (2) et/ou du point de vue de l'environnement de trafic (40).

10. Procédé selon l'une quelconque des revendications précédentes, dans lequel une partie de programme corrompu est introduite dans l'algorithme (34).

11. Procédé selon l'une quelconque des revendications précédentes, dans lequel la validation de l'algorithme (34) est effectuée en comparant la trajectoire (Tr) suivie et la trajectoire virtuelle (Tv).

12. Procédé selon l'une quelconque des revendications précédentes, dans lequel les données de la logique d'environnement (10, 11, 12, 13, 14, 15) et de la logique de véhicule automobile (16, 18, 20) sont mémorisées en continu de manière intermédiaire.

13. Système comprenant un véhicule automobile (2) et une simulation de trafic (46), le véhicule automobile (2) comprenant un dispositif de commande (4) dans lequel est incorporé un module de produit de programme informatique (30), le module de produit de programme informatique (30) contenant un algorithme entraîné (34) et un réseau neuronal auto-apprentissage (32) l'algorithme (34) est conçu pour calculer une trajectoire virtuelle (Tv) sur la base des données fournies à l'appareil de commande (4) d'une logique d'environnement (10, 11, 12, 13, 14, 15) et d'une logique de véhicule automobile (16, 18, 20) et dans lequel l'algorithme (34) est en outre conçu pour dériver une métrique (d) à partir d'une comparaison d'une trajectoire roulée (Tr) et de la trajectoire virtuelle (Tv), de sorte que des données de la logique ambiante (10, 11, 12, 13, 14, 15) et de la logique de véhicule automobile (16, 1, 1, 8, 20) sont mémorisées lorsque des critères métriques (d > dmin) sont remplis pour une situation de trafic et que la simulation de trafic (46) est conçue pour analyser les informations fournies concernant la situation de trafic et pour les analyser à l'aide de données cartographiques, de la logique d'environnement (10, 11, 12, 13, 14, 15); et L'invention concerne un système de détection de véhicule automobile (16, 18, 20) destiné à créer une image virtuelle de la situation du trafic, et dans lequel la simulation de trafic (46) est en outre adaptée pour faire varier les données de la situation du trafic de sorte que l'algorithme (34) peut être entraîné par la variation de la situation du trafic.

14. Module de produit de programme d'ordinateur pour un système selon la revendication 13, comprenant un algorithme entraîné (34) et un réseau neuronal auto-apprentissage (32), l'algorithme (34) étant formé sur la base des données fournies à un contrôleur (4) d'une optique d'environnement (10, 11, 12, 13, 14, 15) et une logique de véhicule automobile (16, 18, 20) pour calculer une trajectoire virtuelle (Tv), et dans laquelle l'algorithme (34) est conçu pour dériver une métrique (d) à partir d'une comparaison d'une trajectoire roulée (Tr) et de la trajectoire virtuelle (Tv), de sorte que des données d'une trajectoire Un détecteur d'environnement (10, 11, 12, 13, 14, 15) et un détecteur de véhicule automobile (16, 18, 20) pour une simulation de trafic (46) sont stockés lorsque des critères de métriques (d > dmin) sont remplis pour une situation de trafic, et dans lequel l'algorithme (34) ) est également formé pour être entraîné par une variation de la situation du trafic.
